# EUROPÄISCHE PATENTSCHRIFT

(11) **EP 1 896 742 B1**
(45) Veröffentlichungstag und Bekanntmachung des Hinweises auf die Patenterteilung: **19.08.2009**
(21) Anmeldenummer: 06754302.5
(22) Anmeldetag: 12.06.2006
(51) Int. Cl.: F16D 3/223

(54) **GLEICHLAUFFESTGELENK**
CONSTANT-VELOCITY FIXED JOINT
JOINT HOMOCINETIQUE FIXE

(30) Priorität: 21.06.2005 DE 102005029042
(43) Veröffentlichungstag der Anmeldung: 12.03.2008
(73) Patentinhaber: Volkswagen Aktiengesellschaft, 38436 Wolfsburg (DE)
(72) Erfinder: SCHAAF, Gregor, 38162 Cremlingen (DE); KAISER, Gerhard, 38550 Isenbüttel (DE)
(86) Internationale Anmeldenummer: PCT/EP2006/005613
(87) Internationale Veröffentlichungsnummer: WO 2006/136308

(56) Entgegenhaltungen:
- EP-A- 1 296 079
- DE-A1- 10 260 172
- DE-C1- 19 514 868

## Beschreibung

Die Erfindung bezieht sich auf ein Gleichlauffestgelenk, umfassend ein Gelenkaußenteil, das an seinem Innenumfang Kugellaufbahnen aufweist, ein Gelenkinnenteil, das an seinem Außenumfang durch Stege getrennte Kugellaufbahnen aufweist, wobei die Kugellaufbahnen des Gelenkaußenteils und des Gelenkinnenteils einander paarweise gegenüberliegend angeordnet sind, weiterhin Kugeln, die in den Laufbahnpaaren aufgenommen sind, und einen Käfig, der zwischen dem Gelenkaußenteil und dem Gelenkinnenteil angeordnet ist und Fenster zur Aufnahme der Kugeln aufweist, wobei zur Montierbarkeit mindestens einer der Stege des Gelenkinnenteils in ein Fenster des Käfigs einführbar ist.

Derartige Gleichlauffestgelenke werden beispielsweise in Seitenwellen von Kraftfahrzeugen eingesetzt.

Bei Gleichlauffestgelenken variiert die Umschlingung, d. h. der Winkelbereich, in dem eine drehmomentübertragende Kugel von der zugehörigen Kugellaufbahn umschlossen wird, sehr stark über die Länge der Laufbahn. Unter großen Beugewinkeln des Gelenks werden von den Kugeln die Randbereiche der Laufbahnen erreicht. In diesen Randbereichen ist die Aufteilung der Kugelumschlingung zwischen dem Innenteil und dem Außenteil zumeist sehr ungleichmäßig. Einer kleinen Umschlingung durch eine Laufbahn des Innenteils steht eine große Umschlingung durch die korrespondierende Laufbahn des Außenteils gegenüber und umgekehrt.

Bei der Übertragung hoher Drehmomente bei großen Beugewinkeln können die Kugeln in Laufbahnbereichen mit kleiner Umschlingung nicht ausreichend aufgenommen werden. Vielmehr entstehen dabei plastische Verformungen, bei denen Material in radialer Richtung verdrängt wird. Dieses Material behindert die Beweglichkeit des Käfigs. Hierdurch kann es zu einem Klemmen und in der Folge zu einem Bruch des Käfigs kommen.

Gelenke mit einer Laufbahn ohne Hinterschnitt, bei denen die Laufbahn an der Öffnungsseite des Gelenks parallel zur Mittelachse des Innenteils bzw. Außenteils ausläuft, zeichnen sich durch günstige Fertigungseigenschaften aus und sind auch für große Beugewinkel von mehr als 48 Grad geeignet. Bei derartigen Gelenken ist die vorstehend erläuterte Aufteilung der Umschlingung zwischen dem Innenteil und dem Außenteil jedoch besonders ungünstig.

In der DE 102 60 172 A1 der Anmelderin wurde ein Gleichlauffestgelenk vorgestellt, bei dem die Umschlingung der drehmomentübertragenden Kugeln in den kritischen Randbereichen der Kugellaufbahnen verbessert wird. Hierzu wird an den zur Bauteilmittelachse hin gekrümmten Endabschnitten der Laufbahnen der Krümmungsradius gegenüber den üblicherweise verwendeten Bahnformen vergrößert. Dies ermöglicht Gleichlauffestgelenke mit Beugewinkeln von 48 Grad und mehr, die bei großen Beugewinkeln eine hohe Bruchfestigkeit aufweisen und sehr kompakt bauen.

Der Gestaltung der Laufbahnen wirkt sich auf die Gestaltung des Käfigs aus, da die Kugeln bei der Bewegung entlang der Laufbahnen in Radialrichtung nicht aus den Käfigfenstern herauswandern dürfen. Kleine Radialwege ermöglichen dünne Käfige, bei denen dann wiederum die Problematik der Festigkeit in den Vordergrund rückt, für die vor allem die Gestaltung der Fenster sowie gegebenenfalls vorhandener zusätzlicher Montageausnehmungen von Bedeutung ist.

Letztere werden an dem Käfig vorgesehen, um den Zusammenbau mit dem Gelenkinnenteil und dem Gelenkaußenteil sowie das Einsetzen der Kugeln zu ermöglichen.

Aus diesen Randbedingungen ergeben sich teilweise widerstreitende Anforderungen, die nicht ohne weiteres miteinander in Einklang zu bringen sind.

Die vorliegende Erfindung geht von einem eingangs genannten Gleichlauffestgelenk aus. Sie zielt darauf ab, einen einfachen Zusammenbau des Gelenkinnenteils und des Käfigs zu ermöglichen, ohne die Funktionsflächen im Hinblick auf die vorstehend erläuterte Problematik zu beeinträchtigen.

Dabei setzt die Erfindung auf das Prinzip, das Gelenkinnenteil in den Käfig einzuschwenken, da beide mit korrespondierenden und im Zusammenbauzustand ineinandergreifenden Kugelflächen versehen sind, die eine axiale Montage ausschließen. Hierzu wird ausgenutzt, zum Einführen des Gelenkinnenteils in den Käfig mindestens einen der Stege des Gelenkinnenteils zumindest teilweise in Eingriff mit einem Fenster des Käfigs zu bringen, woraufhin ausreichend Spiel zur Verfügung steht, um die Mitte der Außenkugelform des Gelenkinnenteils mit der Mitte der Innenkugelform des Käfigs zu überlagern. In dieser Stellung, in der der Steg bereits wieder außer Eingriff mit dem Fenster gelangt ist, kann dann die Achse des Gelenkinnenteils zu der Achse des Käfigs ausgerichtet werden.

Diese Vorgehensweise ist unter anderem aus der DE 1 298 785 A und der DE 195 14 868 C1 bekannt. Um ein Einführen eines Stegs in ein Käfigfenster zu ermöglichen, besteht die Möglichkeit, zumindest ein Käfigfenster entsprechend zu erweitern. Allerdings würde dies die Belastbarkeit des Käfigs verringern. Insbesondere bei dünnen Käfigen führt dies wiederum zu einer verringerten Bruchfestigkeit des Gelenks bei großen Beugewinkeln. In der DE 1 298 785 A und der DE 195 14 868 C1 werden daher Maßnamen auf Seiten des Gelenkinnenteils vorgeschlagen, so dass die Fenster am Käfig klein bleiben. Gemäß der DE 1 298 785 A wird einer der Stege in Axialrichtung verkürzt, so dass dieser in ein Käfigfenster passt. Hiermit ist jedoch eine Schwächung an der betreffenden Laufbahn am Gelenkinnenteil verbunden, wenn die Laufbahnen weiterhin bis in den ursprünglichen Randbereich genutzt werden. Andernfalls ergibt sich ein reduzierter maximaler Beugewinkel. Überdies wird im Gelenk eine Unwucht erzeugt. Weiterhin muss bei Verkürzung lediglich eines Stegs bei der Montage eine genaue Lagezuordnung erfolgen, die einen erhöhten Handhabungsaufwand bedingt. Gemäß der DE 195 14 868 C1 wird nicht die Axiallänge eines Steges am Gelenkinnenteil gekürzt, sondern der Steg mit einer Fase versehen, so dass dieser zumindest teilweise in ein Käfigfenster eingreifen kann. Allerdings resultiert auch dies in einer Schwächung der betreffenden Laufbahnen, da in diesem Bereich die Umschlingung der Kugeln abnimmt, falls dort nicht eine verhältnismäßig starke Krümmung der Kugellaufbahn vorgesehen wird.

Weiterhin ist aus der EP 0 571 551 B1 bekannt; durch Phasen, die entlang der axialen Ränder zumindest einer Kugellaufbahn vorgesehen sind, die Weite des Gelenkinnenteils zu verringern, so dass sich dieses in einem um 90° verschwenkten Zustand in den Käfig einführen lässt. Hierdurch wird jedoch die Umschlingung der betreffenden Kugel und damit die Tragfähigkeit der Kugellaufbahn geschwächt.

Möglich ist auch die Anbringung von Montageausnehmungen am Käfig selbst, wie dies beispielsweise in der DE 100 32 853 A1 oder der DE 102 53 627 A1 vorgeschlagen wird. Neben einer Schwächung des Käfigs bedeutet dies einen erhöhten Fertigungsaufwand für den Käfig. Bei dünnen Käfigen ist dies nicht praktikabel.

Vor diesem Hintergrund sind folglich andere Maßnahmen erforderlich, um eine Schwächung der Funktionsflächen des Gelenks zu vermeiden.

Erfindungsgemäß wird dazu ein Gleichlauffestgelenk mit den Merkmalen von Patentanspruch 1 vorgeschlagen. Es hat sich nämlich gezeigt, dass den vorstehend erläuterten Anforderungen durch Einhaltung bestimmter Bedingungen Rechnung getragen werden kann, indem bei ungebeugtem Gelenk in einer die Kugelmitten schneidenden Ebene folgende Bedingung an dem Gelenkinnenteil eingehalten wird:
für PCD kleiner oder gleich 62 mm: ε/γ größer 1,6
   und
für PCD größer 62 mm ε/γ größer 1,8
   wobei PCD der Teilkreisdurchmesser durch die Kugelmittelpunkte ist, ε der die Laufbahn einschließende Winkel (Laufbahnwinkel) zwischen den Schnittpunkten des Kugeldurchmessers mit dem gedachten Innenteil-Außendurchmesser bezogen auf den Gelenkachsenschnittpunkt der genannten Ebene ist, und γ der den Steg einschließende Winkel (Stegwinkel) zwischen den Schnittpunkten des Kugeldurchmessers mit dem gedachten Innenteil-Außendurchmesser bezogen auf den Gelenkachsenschnittpunkt der genannten Ebene ist.

Auf diese Weise werden Gleichlauffestgelenke erhalten, die unter großen Beugewinkeln eine hohe Festigkeit aufweisen, sehr kompakt bauen und einen herstellungs- und montagetechnisch günstigen Aufbau besitzen.

Weitere vorteilhafte Ausgestaltungen der Erfindung sind in den Ansprüchen angegeben.

Gemäß einer vorteilhaften Ausgestaltung wird an dem Gelenkinnenteil weiterhin folgende Bedingung eingehalten:
für PCD kleiner oder gleich 62 mm: t/d größer 0,16
   und
für PCD größer 62 mm: t/d größer 0,168
   wobei PCD der Teilkreisdurchmesser durch die Kugelmittelpunkte ist, t die Tiefe der Laufbahn ist, und d der Außendurchmesser des Gelenkinnenteils ist. Hierdurch ergibt sich zum einen die Möglichkeit, alle Stege gleich mit einer ausreichenden Funktionsfläche zu gestatten. Zum anderen kann die Belastbarkeit des Käfigs gesteigert werden, da die axiale Länge des Käfigs auf der Montageseite vergrößert werden kann.

Vorzugsweise ist der Käfig frei von Einführungsnuten für das Gelenkinnenteil. Hierdurch werden Schwächungen des Käfigs vermieden, der so verhältnismäßig dünn ausgebildet werden kann. Zudem entfällt ein zusätzlicher Bearbeitungsaufwand auf Seiten des Käfigs.

Weiterhin weisen in vorteilhafter Ausgestaltung alle Stege die gleiche axiale Länge auf. Dies vermeidet jegliche Schwächung der Laufbahnen und vermeidet Unwuchten sowie zusätzlichen Bearbeitungsaufwand.

Zudem können alle Fenster des Käfigs in Umfangsrichtung die gleiche Länge aufweisen, was deren Herstellung erleichtert.

In vorteilhafter Ausgestaltung sind alle Fenster des Käfigs gleichartig ausgebildet und gleichverteilt am Umfang des Käfigs angeordnet. Hierdurch werden insbesondere lokal verstärkte Überdimensionierungen des Käfigs vermieden und eine kompakte Bauweise begünstigt.

Weiterhin kann der axiale Abstand f der Mitte der Käfigfenster vom Käfigrand der Montageseite in Relation zum Außendurchmesser g des Käfigs groß gewählt werden, wobei folgende Bedingung eingehalten wird:
f/g größer 0,275.

Außerdem kann der Radius h der Ausrundung der Käfigfenster in Relation zur axialen Länge der Käfigfenster i sehr groß gewählt werden. Insbesondere wird hierzu vorzugsweise folgende Bedingung eingehalten:
für PCD kleiner oder gleich 62 mm: h/i größer 0,4
   und
für PCD größer 62 mm: h/i größer 0,46

Durch die Einhaltung der genannten Bedingung werden ausgeprägte Spannungsspitzen an den Käfigstegen zwischen den Fenstern vermieden.

Weiterhin kann der Öffnungsdurchmesser j an der Montageseite des Käfigs in Relation zum Außendurchmesser d des Gelenkirinenteils wie folgt klein gewählt werden:
d/j größer 1,11.

Insbesondere bei Gelenken mit Laufbahnen ohne Hinterschnitt, sogenannten UF-Gelenken ist dies von Vorteil.

Prinzipiell können die Kugelmittelpunkte der Innenkugelfläche und der Außenkugelfläche des Käfigs zusammenfallen. Es ist jedoch auch möglich, zwischen diesen einen axialen Offset vorzusehen.

Weiterhin kann vorgesehen sein, dass die Laufbahnpaare einen einseitigen Öffnungswinkel bilden, der vorzugsweise zur Öffnungsseite des Gelenks gerichtet ist. Solche Gelenke erlauben größere Beugewinkel, als solche, bei denen der Öffnungswinkel umgekehrt ausgerichtet ist und die sich in der Regel durch bessere Festigkeitseigenschaften auszeichnen

Die vorstehenden Maßnahmen eignen sich vor allem für Gelenke mit sechs oder sieben Laufbahnpaaren bzw. Kugeln, mit denen maximale Gelenkbeugewinkel größer 45° erreicht werden.

Nachfolgend wird die Erfindung anhand eines in der Zeichnung dargestellten Ausführungsbeispiels näher erläutert. Die Zeichnung zeigt in:
- Figur 1: eine Schnittansicht eines Ausführungsbeispiels eines Gleichlauffestgelenks nach der Erfindung,
- Figur 2: eine Ansicht auf die Öffnungs- bzw. Montageseite des Gelenks aus Figur 1,
- Figur 3: eine Ansicht des Gelenkinnenteils in Richtung der Gelenkachse sowie eine Seitenansicht desselben quer zur Gelenkachse,
- Figur 4: eine Seitenansicht des Käfigs im Schnitt,
- Figur 5: eine Ansicht beim Einführen des Gelenkinnenteils in den Käfig, wobei ein Steg des Gelenkinnenteils in ein Käfigfenster eingreift,
- Figur 6: eine Ansicht eines Montageschrittes nach dem Einführen des Gelenkinnenteils in den Käfig während der Zentrierung der Mitten des Gelenkinnenteils und des Käfigs vor einem anschließenden Verschwenken in eine achsparallele Lage, und in
- Figur 7: den Verlauf einer Kugellaufbahn am Gelenkinnenteil.

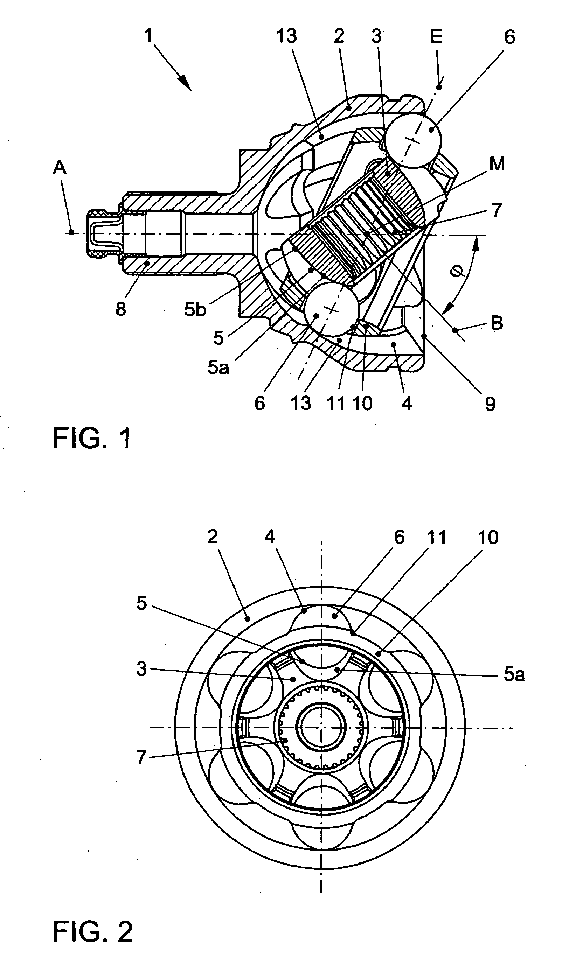

Das in Figur 1 dargestellte Gleichlauffestgelenk 1 umfasst ein Gelenkaußenteil 2 und ein Gelenkinnenteil 3. Sowohl das Gelenkaußenteil 2 als auch das Gelenkinnenteil 3 sind an ihren zueinander weisenden kugelförmigen Umfangsflächen mit Kugellaufbahnen 4 bzw. 5 versehen, die jeweils paarweise eine Kugel 6 aufnehmen. Dabei kann das Gelenkinnenteil 3, das hier beispielhaft eine zentrale Aufnahme 7 mit einer Kerbverzahnung für eine Welle aufweist, gegenüber dem Gelenkaußenteil 2 um ein Beugezentrum M des Gelenks verschwenkt werden. Der Querschnitt der Kugellaufbahnen 4 bzw. 5 ist vorzugsweise der Kontur der Kugeln 6 angepasst. Es ist jedoch auch möglich, zumindest eine der Laufbahnen so auszugestalten, dass die zugehörige Kugel 6 über zwei Kontaktstellen gegen die jeweilige Laufbahn 4 bzw. 5 abgestützt ist. Dies trifft beispielsweise auf elliptische oder gotische Laufbahnen zu.

Das Gelenkaußenteil 2 nach dem Ausführungsbeispiel besitzt eine glockenartige, das Gelenkinnenteil 3 umschließende Form. Die offene Seite der Glocke bildet eine Gelenköffnung 9, von welcher her das Gelenkinnenteil 3 in das Gelenkaußenteil 2 eingesetzt ist. An der gegenüberliegenden Seite der Gelenköffnung 9 ist an dem-Gelenkaußenteil 2 ein weiterer Anschluss 8 für eine Welle ausgebildet.

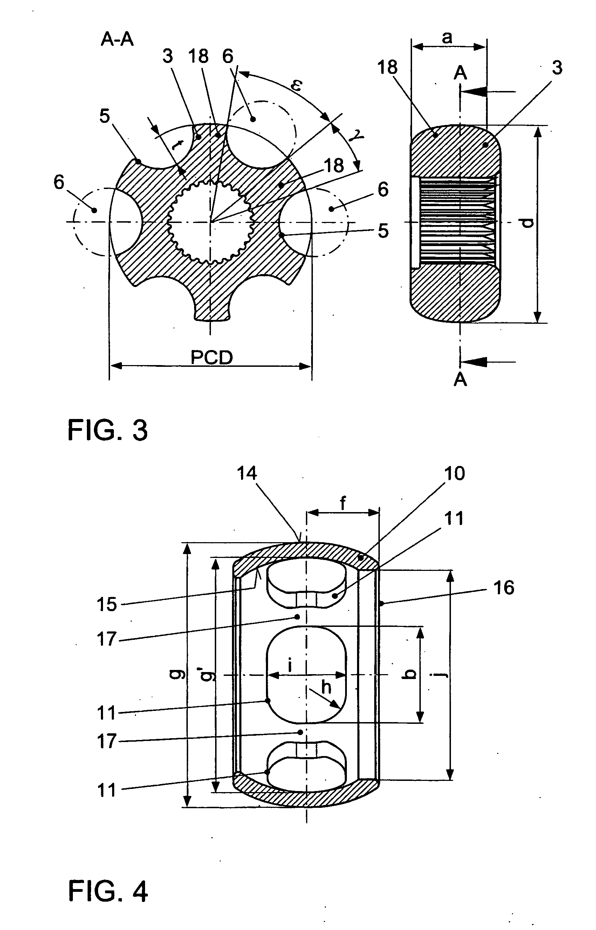

Zwischen dem Gelenkaußenteil 2 und dem Gelenkinnenteil 3 ist ein dünnwandiger Käfig 10 angeordnet, der in Figur 4 näher dargestellt ist. Der außen und innen kugelförmig ausgebildete Käfig 10 umgibt das Gelenkinnenteil 3 und ist an dem Gelenkaußenteil 2 in der Art eines Kugelgelenks gelagert. Dabei sind die Außenumfangsfläche 14 und die Innenumfangsfläche 15 des Käfigs 10 zueinander konzentrisch. Das Verhältnis von Käfigaußendurchmesser g zu Käfiginnendurchmesser g' beträgt vorzugsweise weniger als 1,15, d. h. der Käfig 10 ist mit verhältnismäßig geringer Wanddicke ausgeführt.

Der Käfig 10 weist weiterhin Fenster 11 zur Aufnahme und Führung der Kugeln 6 auf. Diese werden in einer gemeinsamen Ebene E gehalten, die bei einer Beugung des Gelenks 1 um den Beugewinkel ϕ zwischen den Achsen des Gelenkaußenteils 2 und des Gelenkinnenteils 3 um den halben Winkel angestellt ist.

Wie Figur 4 zeigt, ist der Käfig 10 als einfacher Ringkörper mit kugelförmigen Außen- und Innenumfangsflächen 14 und 15 ausgebildet. Dabei besitzen alle Fenster 11 in Umfangsrichtung die gleiche Länge b. Bei dem dargestellten Ausführungsbeispiel sind zudem die Fenster 11 am Umfang gleichverteilt angeordnet und weisen alle die gleiche Form auf. Die ermöglicht eine sehr einfache und kostengünstige Herstellung. Durch das Fehlen weiterer Nuten und Aussparungen an dem Käfig 10 werden zusätzlicher Bearbeitungsaufwand und eine Schwächung des Käfigs 10 vermieden, so dass dieser verhältnismäßig dünn ausgeführt werden kann.

Hierzu trägt weiter bei, dass der Radius h der Ausrundung der Käfigfenster 11 im Verhältnis zu der axialen Länge i der Käfigfenster 11 verhältnismäßig groß gewählt wird. Dies verbessert die . Belastbarkeit der Käfigstege 17, da die Kerbwirkung reduziert ist. Für Gelenke 1 mit einem Teilkreisdurchmesser PCD der Kugelmittelpunkte kleiner oder gleich 62 mm ist das Verhältnis
h/i größer 0,4.

Bei größeren Gelenken mit einem Teilkreisdurchmesser PCD größer 62 mm gilt:
h/i größer 0,46

Weiterhin ist vorgesehen, den axialen Abstand f der Mitte der Käfigfenster 11 vom Käfigrand 16 der Montageseite in Relation zum Außendurchmesser g des Käfigs 10 wie folgt zu wählen:
f/g größer 0,275.

In Abwandlung des dargestellten Ausführungsbeispiels können die kugelige Außenfläche 14 und die kugelige Innenfläche 15 an dem Käfig 10 auch mit einem axialen Versatz zueinander angeordnet sein. Das vorstehende Wanddickeverhältnis bezieht sich dann auf die Ebene, in der die Kugeln durch den Käfig geführt werden.

Zur Erzielung großer Beugewinkel an dem Gelenk 1 sind die Öffnungswinkel der Laufbahnpaare so ausgebildet, dass diese zur Öffnungsseite 9 des Gelenks 1 gerichtet sind bzw. öffnen. Wie in Figur 1 zu erkennen ist, lassen sich mit dem erfindungsgemäßen Gelenk 1 Beugewinkel ϕ zwischen der Gelenkachse A des Gelenkaußenteils und der Gelenkachse B des Gelenkinnenteils 3 von 45 Grad und mehr erzielen.

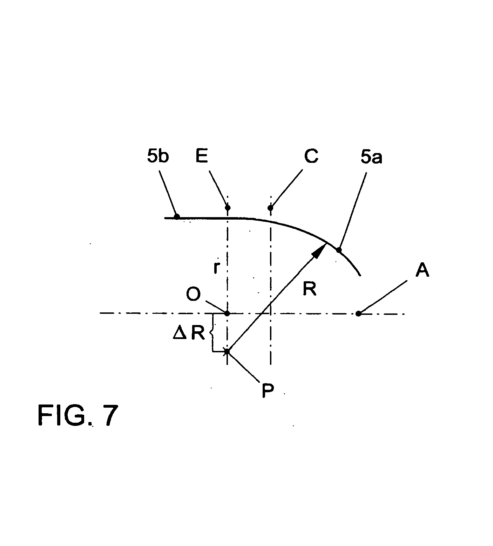

Im Hinblick auf die Verbesserung der Bruchfestigkeit bei großen Beugewinkeln ϕ weisen die Laufbahnen 5 an dem Gelenkinnenteil 3 Abschnitte unterschiedlicher Krümmung auf, die in Figur 1 mit 5a und 5b bezeichnet sind. Beide Abschnitte 5a und 5b gehen kontinuierlich ineinander über. Der entsprechende Bahnverlauf der zugehörigen Kugel 6 ist in Figur 7 dargestellt.

Dabei weist der Abschnitt 5a zu der Öffnungsseite 9 des Gelenks 1 einen Abrollradius R um den Punkt P auf, der größer ist, als ein gedachter Kreisbogen mit dem Radius r um einen Punkt O auf der Innenteilmittelachse B. Der entsprechende radiale Versatz zwischen den Punkten O und P ist in Figur 7 mit ΔR bezeichnet, so dass gilt: R = r + ΔR. Der Abrollradius R am Abschnitt 5a ist kleiner als der Abrollradius des axial an dem Gelenkinnenteil 3 gegenüberliegenden Abschnitts 5b. Letzterer kann auch einen unendlichen Krümmungsradius aufweisen, d.h. hinterschnittfrei sein.

Vorzugsweise weist der Abschnitt 5a in Richtung der Öffnungsseite 9 einen Laufbahnverlauf auf, der zwischen einem gedachten achsparallelen Verlauf und einem gedachten Kreisbogen mit dem Radius r um einen Punkt auf der Innenteilmittelachse B liegt, wobei hier Abwandlungen von der in Figur 7 dargestellten Bahnform möglich sind. Insbesondere können die in der DE 102 60 172 A1 beschriebene Bahnverläufe verwendet werden.

Hierdurch kann ein verhältnismäßig dünner Käfig 10 zum Einsatz kommen, der bei Gelenkumdrehungen unter großem Beugewinkel eine ausreichende Führung über den gesamten, dabei auftretenden Radialversatz der Kugeln 6 gewährleistet. An den Laufbahnenden wird so eine gute Umschlingung der Kugeln 6 gewährleistet, die sich vorteilhaft auf die Tragfähigkeit der Kugellaufbahnen 5 und die Bruchfestigkeit auswirkt. Vorstehend wurde lediglich der Bahnverlauf am Gelenkinnenteil 3 beschrieben. Der Bahnverlauf am Gelenkaußenteil 2 wird jedoch spiegelbildlich analog gestaltet, so dass auch dort eine hohe Tragfähigkeit der Laufbahnen 4 bei großen Beugewinkeln gegeben ist. Am Gelenkaußenteil 2 und am Gelenkinnenteil 3 liegen somit korrespondierende Bahnverläufe vor.

Praktisch drückt sich dies dadurch aus, dass in Figur 1 das Laufbahnprofil 4 bzw. 5 an seinem Ende an der der Gelenköffnung 9 gegenüberliegenden Seite mit der Kugel 6 einen hohen Überlappungsgrad aufweist. Durch den dünneren Käfig 11 lässt sich eine entsprechend verbesserte Umschlingung mit einem hohen Überlappungsgrad auch an der Seite der Gelenköffnung 9 realisieren. Bei einem Beugewinkel von 50° ist die Kugel 6 in einem Winkelbereich von mehr als 115° von der Laufbahn 5 umschlungen. Am Abschnitt 13 der Laufbahn 4 des Gelenkaußenteils 2 beträgt der entsprechende Umschlingungswinkel mindestens 122°.

Für die Wanddicke des Käfigs 10 ergeben sich in dem erfindungsgemäßen Ausführungsbeispiel Werte kleiner als 25 % des Durchmessers der Kugeln 6. Bei dem hier dargestellten Ausführungsbeispiel liegt dieser Wert unter 21%. Im Hinblick auf eine ausreichende Festigkeit des Käfigs 10 sollten jedoch Werte von weniger als 10% nicht unterschritten werden.

Der dünne Käfig 10 erlaubt weiterhin eine besonders kompakte Bauweise des Gelenks, da sich der Kugelmittelpunkt-Teilkreisdurchmesser PCD sehr eng ausführen lässt. Bei einem Sechs-Kugel-Gelenk sind folgende Verhältnisse realisierbar.
Bei PCD größer 63 mm: (PCD+d_{K})/d_{K} < 4
   und
bei PCD kleiner oder gleich 63 mm: (PCD+d_{K})/d_{K} < 4,25,
   wobei d_{K} den Kugeldurchmesser repräsentiert.

Zwischen den gekrümmten Abschnitten der Laufbahnen kann ein Axialversatz vorgesehen sein. Weiterhin kann zwischen der Mittelachse der kugeligen Außenfläche des Gelenkinnenteils 3 und dem Krümmungsmittelpunkt P des Abschnitts 5a ein Axialversatz als sogenannten Stuber-Offset vorgesehen sein.

Zur weiteren Verbesserung der Bruchfestigkeit bei großen Beugewinkeln haben sich an einem Gleichlauffestgelenk 1 der vorstehend erläuterten Art die folgenden Maßnahmen als vorteilhaft erwiesen, durch die ein Einschwenken des Gelenkinnenteils 3 in den Käfig bei der Montage möglich ist und dennoch die Funktionsflächen, d. h. insbesondere die Kugellaufbahnen im Hinblick auf ihre Tragfähigkeit optimal gestaltet bleiben.

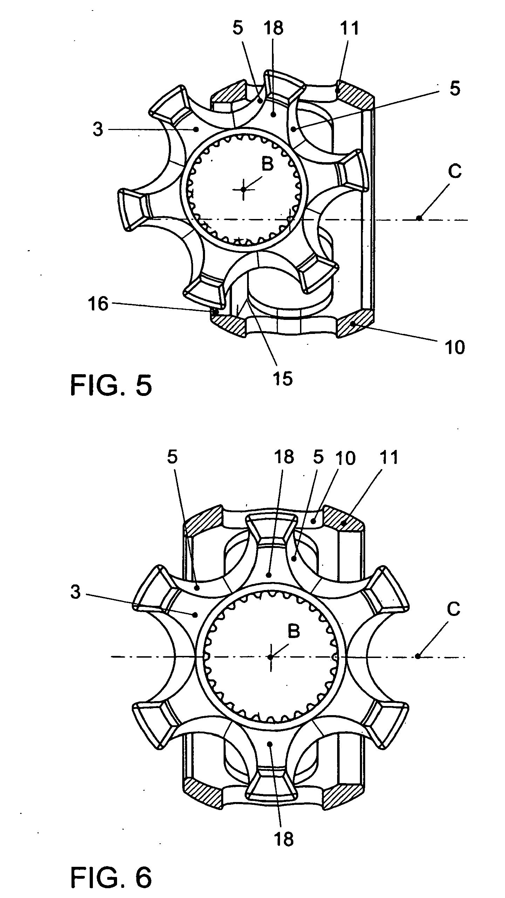

Dieses Einschwenken ist in den Figuren 5 und 6 dargestellt. Wie in Figur 5 gezeigt, wird hierzu das Gelenkinnenteil 3 mit seiner Achse B gegenüber dem Käfig 11 mit der Achse C um 90 Grad angewinkelt. Bei dem in Figur 5 dargestellten Einführvorgang greift einer der Stege 18 des Gelenkinnenteils 3, der in Umfangsrichtung durch zwei Kugellaufbahnen 5 begrenzt wird, in ein Fenster 11 des Käfigs 10 ein. Hierdurch wird soviel Spiel erhalten, dass der gegenüberliegende Steg 18 den durch die Kugelform des Innenumfangs des Käfigs 11 gebildeten Hinterschnitt überwindet. Der Käfig 11 kann hierzu an seiner Einführseite 16 gegebenenfalls einen größeren Öffnungsdurchmesser als an seiner gegenüberliegenden Seite aufweisen. Anschließend können die beiden Bauteile, wie in Figur 6 gezeigt, zueinander ausgerichtet werden, indem die Mittelpunkte der Kugelflächen am Gelenkinnenteil 3 und am Käfig 11 überlagert werden. Sodann lassen sich beide in eine achsparallele Stellung zueinander schwenken, die in Figur 2 gezeigt ist.

Bei diesem Montageregime ist es zur weiteren Verbesserung der Bruchfestigkeit ohne Beeinträchtigung der Funktionsflächen günstig, wenn bei ungebeugtem Gelenk in einer die Kugelmitten schneidenden Ebene E die folgende Bedingung an dem Gelenkinnenteil 3 eingehalten wird.
Bei PCD kleiner oder gleich 62 mm: ε/γ größer 1,6
   und
bei PCD größer 62 mm: ε/γ größer 1,8

Hierbei ist ε der die Laufbahn 5 einschließende Winkel (Laufbahnwinkel) zwischen den Schnittpunkten des Kugeldurchmessers mit dem gedachten Innenteil-Außendurchmesser bezogen auf den Gelenkachsenschnittpunkt M der genannten Ebene E. Dagegen ist γ der den Steg 18 einschließende Winkel (Stegwinkel) zwischen den Schnittpunkten des Kugeldurchmessers mit dem gedachten Innenteil-Außendurchmesser bezogen auf den Gelenkachsenschnittpunkt M der genannten Ebene E.

Alternativ oder ergänzend ist zudem folgende Bedingung eingehalten:
bei PCD kleiner oder gleich 62 mm: t/d größer 0,16
   und
bei PCD größer 62 mm: t/d größer 0,168

Hierbei ist t die Tiefe der Laufbahn 5 und d der Außendurchmesser des Gelenkinnenteils 3. Auf diese Weise lassen sich alle Stege 18 gleich gestalten. Zudem weisen alle eine ausreichende Funktionsfläche am Außenumfang des Gelenkinnenteils 3 auf. Weiterhin wird die Belastbarkeit des Käfigs 11 verbessert, da die axiale Länge des Käfigs 11 an der Montageseite 19 vergrößert werden kann.

Der axiale Abstand f der Mitte der Käfigfenster 11 vom Käfigrand der Montageseite 16 in Relation zum Außendurchmesser g des Käfigs 11 kann nach folgender Beziehung
f/g größer 0,275
groß gewählt werden.

Das vorstehend erläuterte Gleichlauffestgelenk 1 nach dem Ausführungsbeispiel einschließlich seiner Abwandlungen zeichnet sich durch eine hohe Bruchfestigkeit bei großen Beugewinkeln aus, da insbesondere Schwächungen an den Funktionsflächen des Gelenkinnenteils vermieden werden.

Mit der dargestellten Gelenkausführung sind Beugewinkel größer 50° erreichbar.

An den Laufbahnenden wird eine große Umschlingung der Kugeln erreicht, die für die Tragfähigkeit der Laufbahnen von Vorteil ist.

Zudem ist ein einfaches Einschwenken des Gelenkinnenteils in den Käfig möglich. Aufgrund seiner einfachen Form ist dieser zudem günstig herstellbar. Überdies kann der Käfig mit geringer Dicke ausgeführt werden.

Das Gleichlauffestgelenk zeichnet sich überdies durch eine besonders kompakte Bauweise aus.

Die Erfindung wurde vorstehend anhand eines Ausführungsbeispiels näher erläutert. Sie ist jedoch nicht auf dieses Ausführungsbeispiel beschränkt, sondern umfasst alle durch die Patentansprüche definierten Ausgestaltungen.

### Bezugszeichenliste

- 1: Gleichlauffestgelenk
- 2: Gelenkaußenteil
- 3: Gelenkinnenteil
- 4: Kugellaufbahn des Gelenkaußenteils
- 5: Kugellaufbahn des Gelenkinnenteils
- 5a: äußerer Abschnitt der Kugellaufbahn 5
- 5b: innerer Abschnitt der Kugellaufbahn 5
- 6: Kugel
- 7: Wellenaufnahme
- 8: Aufnahme
- 9: Gelenköffnung
- 10: Käfig
- 11: Fenster
- 13: Laufbahn-Endabschnitt am Gelenkaußenteil
- 14: Außenumfangsfläche des Käfigs
- 15: Innenumfangsfläche des Käfigs
- 16: Einführöffnung am Käfig
- 17: Steg an Käfig
- 18: Steg am Gelenkinnenteil
- a: Axiallänge des Stegs 18
- b: Länge des Käfigfensters in Umfangsrichtung
- d: Außendurchmesser des Gelenkinnenteils (geschnitten durch die Kugelmitte des Gelenkinnenteils)
- d_{K}: Kugeldurchmesser
- f: Abstand Käfigfenstermitte - Rand der Einführöffnung am Käfig
- g: Außendurchmesser des Käfigs
- g': Innendurchmesser der kugelförmigen Innenumfangsfläche des Käfigs
- h: Rundungsradius der Käfigfenster
- i: axiale Länge des Käfigfensters
- j: Durchmesser der Einführöffnung am Käfig
- r: Radius
- t: Tiefe der Laufbahnen am Gelenkinnenteil in der Ebene E
- A: Achse des Gelenkaußenteils
- B: Achse des Gelenkinnenteils
- C: Achse des Käfigs
- E: Ebene
- PCD: Teilkreisdurchmesser der Kugelmittelpunkte bei ungebeugtem Gelenk
- O: Punkt auf der Achse des Gelenkinnenteils
- P: Krümmungsmittelpunkt
- R: Radius
- γ: Stegwinkel am Außendurchmesser des Gelenkinnenteils geschnitten durch die Kugelmitten im rechten Winkel zur Achse B bei ungebeugtem Gelenk, wobei der Winkel auf die Schnittpunkte zwischen dem theoretischen Kugeldurchmesser und dem theoretischen Außendurchmesser des Gelenkinnenteils bezogen ist
- ε: Laufbahnwinkel am Außendurchmesser des Gelenkinnenteils geschnitten durch die Kugelmitten im rechten Winkel zur Achse B bei ungebeugtem Gelenk, wobei der Winkel auf die Schnittpunkte zwischen dem theoretischen Kugeldurchmesser und dem theoretischen Außendurchmesser des Gelenkinnenteils bezogen ist
- ϕ: Beugewinkel
- ΔR: Radialversatz

## Patentansprüche

1. Gleichlauffestgelenk, umfassend:
- ein Gelenkaußenteil (2), das an seinem Innenumfang Kugellaufbahnen (4) aufweist,
- ein Gelenkinnenteil (3), das an seinem Außenumfang durch Stege (18) getrennte Kugellaufbahnen (5) aufweist,
- wobei die Kugellaufbahnen (4, 5) des Gelenkaußenteils (2) und des Gelenkinnenteils (3) einander paarweise gegenüberliegend angeordnet sind,
- Kugeln (6), die in den Laufbahnpaaren aufgenommen sind, und
- einen Käfig (10), der zwischen dem Gelenkaußenteil (2) und dem Gelenkinnenteil (3) angeordnet ist und Fenster (11) zur Aufnahme der Kugeln (6) aufweist,
- wobei zur Montierbarkeit mindestens einer der Stege (18) des Gelenkinnenteils (3) in ein Fenster (11) des Käfigs (10) einführbar ist,
**dadurch gekennzeichnet,**
**dass** bei ungebeugtem Gelenk (1) in einer die Kugelmitten schneidenden Ebene (E) folgende Bedingung an dem Gelenkinnenteil (3) eingehalten ist:
für PCD kleiner oder gleich 62 mm: ε/γ größer 1,6
und
für PCD größer 62 mm: ε/γ größer 1,8
wobei
PCD der Teilkreisdurchmesser durch die Kugelmittelpunkte ist,
ε der die Laufbahn (5) einschließende Winkel (Laufbahnwinkel) zwischen den Schnittpunkten des Kugeldurchmessers mit dem gedachten Innenteil- Außendurchmesser bezogen auf den Gelenkachsenschnittpunkt der genannten Ebene (E) ist, und
γ der den Steg (18) einschließende Winkel (Stegwinkel) zwischen den Schnittpunkten des Kugeldurchmessers mit dem gedachten Innenteil- Außendurchmesser bezogen auf den Gelenkachsenschnittpunkt der genannten Ebene (E) ist.

2. Gleichlauffestgelenk nach Anspruch 1, **dadurch gekennzeichnet, dass** folgende Bedingung an dem Gelenkinnenteil (3) eingehalten ist:
für PCD kleiner oder gleich 62 mm: t/d größer 0,16
und
für PCD größer 62 mm: t/d größer 0,168
wobei
PCD der Teilkreisdurchmesser durch die Kugelmittelpunkte ist,
t die Tiefe der Laufbahn (5) ist, und
d der Außendurchmesser des Gelenkinnenteils (3) ist.

3. Gleichlauffestgelenk nach Anspruch 1 oder 2, **dadurch gekennzeichnet, dass** für den axialen Abstand f der Mitte der Käfigfenster vom Käfigrand der Montageseite in Relation zum Außendurchmesser g des Käfigs (10) gilt:
f/g größer 0,275.

4. Gleichlauffestgelenk nach einem der Ansprüche 1 bis 3, **dadurch gekennzeichnet, dass** für den Käfig (11) folgende Bedingung eingehalten ist:
für PCD kleiner oder gleich 62 mm: h/i größer 0,4
und
für PCD größer 62 mm: h/i größer 0,46
wobei
PCD der Teilkreisdurchmesser durch die Kugelmittelpunkte ist,
h der Radius der Ausrundung der Käfigfenster (10) ist, und
i die axiale Länge der Käfigfenster (10) ist.

5. Gleichlauffestgelenk nach einem der Ansprüche 1 bis 4, **dadurch gekennzeichnet, dass** für den Öffnungsdurchmesser j an der Montageseite des Käfigs (10) in Relation zum Außendurchmesser d des Gelenkinnenteils (3) gilt:
d/j größer 1,11.

6. Gleichlauffestgelenk nach einem der Ansprüche 1 bis 5, **dadurch gekennzeichnet, dass** die Kugelmittelpunkte der Außenkugelfläche (14) und der Innenkugelfläche (15) des Käfigs (10) einen axialen Offset aufweisen.

7. Gleichlauffestgelenk nach einem der Ansprüche 1 bis 6, **dadurch gekennzeichnet, dass** die Laufbahnpaare (4, 5) einen einseitigen Öffnungswinkel bilden.

8. Gleichlauffestgelenk nach einem der Ansprüche 1 bis 7, **dadurch gekennzeichnet, dass** die Kugellaufbahnen (5) an dem Gelenkinnenteil (3) Abschnitte (5a, 5b) unterschiedlicher Krümmung aufweisen, die ineinander übergehen, wobei ein Endabschnitt (5a) in Richtung der Öffnungsseite (9) des Gelenks (1) einen Laufbahnverlauf aufweist, der zwischen einem gedachten achsparallelen Verlauf und einem gedachten Kreisbogen um einen Punkt (O) auf der Achse (B) des Gelenkinnenteils (3) liegt.

9. Gleichlauffestgelenk nach einem der Ansprüche 1 bis 8, **dadurch gekennzeichnet, dass** die Wanddicke des Käfigs (10) kleiner als 25 %, vorzugsweise kleiner als 21% des Durchmessers der Kugeln (6) ist.

10. Gleichlauffestgelenk nach einem der Ansprüche 1 bis 9, **dadurch gekennzeichnet, dass** das Verhältnis von Käfigaußendurchmesser zu Käfiginnendurchmesser in der Führungsebene der Kugeln (6) kleiner als 1,15 ist.

11. Gleichlauffestgelenk nach einem der Ansprüche 1 bis 10, **dadurch gekennzeichnet, dass** dieses als ein Sechs-Kugel-Gelenk ausgebildet ist, bei dem gilt:
für PCD größer 63 mm: (PCD+d_{K})/d_{K} < 4
und
für PCD kleiner oder gleich 63 mm: (PCD+d_{K})/d_{K} < 4,25,
wobei d_{K} den Kugeldurchmesser und PCD den Kugelmittelpunkt-Teilkreisdurchmesser repräsentiert.

12. Gleichlauffestgelenk nach einem der Ansprüche 1 bis 11, **dadurch gekennzeichnet, dass** die Laufbahnen (4) an dem Gelenkaußenteil (2) Abschnitte unterschiedlicher Krümmung aufweise, die ineinander übergehen, wobei jeweils ein Endabschnitt (13) gegenüber der Öffnungsseite (9) des Gelenks (1) einen Laufbahnverlauf aufweist, der zwischen einem gedachten achsparallelen Verlauf und einem gedachten Kreisbogen um einen Punkt auf der Gelenkaußenteilachse (A) liegt.

13. Gleichlauffestgelenk nach einem der Ansprüche 1 bis 12, **dadurch gekennzeichnet, dass** der maximale Beugewinkel im Betrieb größer als 50° ist.

## Claims

1. Constant-velocity fixed joint, comprising:
- an outer joint part (2) which has ball raceways (4) at its inner periphery,
- an inner joint part (3) which has ball raceways (5), which are separated by webs (18), at its outer periphery,
- with the ball raceways (4, 5) of the outer joint part (2) and of the inner joint part (3) being arranged opposite one another in pairs,
- balls (6) which are held in the raceway pairs, and
- a cage (10) which is arranged between the outer joint part (2) and the inner joint part (3) and has windows (11) for holding the balls (6),
- with it being possible, for assemblability, for at least one of the webs (18) of the inner joint part (3) to be inserted into a window (11) of the cage (10),
**characterized**
**in that**, when the joint (1) is not deflected, in a plane (E) which intersects the ball centers, the following condition is adhered to at the inner joint part (3):
for PCD less than or equal to 62 mm: ε/γ greater than 1.6
and
for PCD greater than 62 mm: ε/γ greater than 1.8
where
PCD is the pitch circle diameter through the ball center points,
c is the angle (raceway angle) which encloses the raceway (5) between the points of intersection of the ball diameter with the imaginary inner part outer diameter in relation to the joint axis point of intersection of said plane (E), and
γ is the angle (web angle) which encloses the web (18) between the points of intersection of the ball diameter with the imaginary inner part outer diameter with respect to the joint axis point of intersection of said plane (E).

2. Constant-velocity fixed joint according to Claim 1, **characterized in that** the following condition is adhered to at the inner joint part (3):
for PCD less than or equal to 62 mm: t/d greater than 0.16
and
for PCD greater than 62 mm: t/d greater than 0.168
where
PCD is the pitch circle diameter through the ball center points,
t is the depth of the raceway (5), and
d is the outer diameter of the inner joint part (3).

3. Constant-velocity fixed joint according to Claim 1 or 2, **characterized in that** for the axial spacing f of the center of the cage window from the cage edge of the assembly side in relation to the outer diameter g of the cage (10), the following applies:
f/g greater than 0.275.

4. Constant-velocity joint according to one of Claims 1 to 3, **characterized in that** for the cage (11), the following condition is adhered to:
for PCD less than or equal to 62 mm: h/i greater than 0.4
and for PCD greater than 62 mm: h/i greater than 0.46
where
PCD is the pitch circle diameter through the ball center points,
h is the radius of rounding of the cage window (10), and
i is the axial length of the cage window (10).

5. Constant-velocity fixed joint according to one of Claims 1 to 4, **characterized in that** for the opening diameter j at the assembly side of the cage (10) in relation to the outer diameter d of the inner joint part (3), the following applies:
d/j greater than 1.11.

6. Constant-velocity fixed joint according to one of Claims 1 to 5, **characterized in that** the ball center points of the outer ball face (14) and of the inner ball face (15) of the cage (10) have an axial offset.

7. Constant-velocity fixed joint according to one of Claims 1 to 6, **characterized in that** the raceway pairs (4, 5) form a single-sided opening angle.

8. Constant-velocity fixed joint according to one of claims 1 to 7, **characterized in that** the ball raceways (5) on the inner joint part (3) have sections (5a, 5b) of different curvature, which sections (5a, 5b) merge into one another, with an end section (5a) in the direction of the opening side (9) of the joint (1) having a raceway profile which lies between an imaginary axially parallel profile and an imaginary circular arc about a point (O) on the axis (B) of the inner joint part (3).

9. Constant-velocity fixed joint according to one of Claims 1 to 8, **characterized in that** the wall thickness of the cage (10) is less than 25%, preferably less than 21% of the diameter of the balls (6).

10. Constant-velocity fixed joint according to one of Claims 1 to 9, **characterized in that** the ratio of cage outer diameter to cage inner diameter in the guide plane of the balls (6) is less than 1.15.

11. Constant-velocity fixed joint according to one of Claims 1 to 10, **characterized in that** said constant-velocity fixed joint is embodied as a six-ball joint, in which the following applies:
for PCD greater than 63 mm: (PCD+d_{K})/d_{K} < 4
and
for PCD less than or equal to 63 mm: (PCD+d_{K})/d_{K} < 4.25
where d_{K} represents the ball diameter and PCD represents the ball center point pitch circle diameter.

12. Constant-velocity fixed joint according to one of Claims 1 to 11, **characterized in that** the raceways (4) on the outer joint part (2) have sections of different curvature, which sections merge into one another, with in each case one end section (13) opposite the opening side (9) of the joint (1) having a raceway profile which lies between an imaginary axially parallel profile and an imaginary circular arc about a point on the outer joint part axis (A).

13. Constant-velocity fixed joint according to one of Claims 1 to 12, **characterized in that** the maximum deflection angle in operation is greater than 50°.

## Revendications

1. Joint homocinétique fixe, comprenant :
- une partie extérieure de joint (2) comportant des pistes de roulement à billes (4) au niveau de sa périphérie intérieure ;
- une partie intérieure de joint (3) comportant des pistes de roulement à billes (5) séparées par des entretoises (18) au niveau de sa périphérie extérieure ;
- les pistes de roulement à billes (4, 5) de la partie extérieure du joint (2) et de la partie intérieure de joint (3) étant disposées de façon à être opposées par paire l'une par rapport à l'autre ;
- les billes (6) logées dans les paires de piste de roulement ; et
- une cage (10) disposée entre la partie extérieure de joint (2) et la partie intérieure de joint (3) et comportant des fenêtres (11) pour loger les billes (6) ;
- au moins une des entretoises (18) de la partie intérieure de joint (3) pouvant être introduite dans une fenêtre (11) de la cage (10) pour le montage ; **caractérisé en ce que** lorsque le joint (1) n'est pas coudé dans un plan (E) coupant le milieu de la bille, la condition suivante s'applique dans la partie intérieure de joint (3) :
pour PCD inférieur ou égal à 62 mm : ε/γ supérieur à 1,6 ; et
pour PCD supérieur à 62 mm : ε/γ supérieur à 1,8 ;
PCD étant le diamètre de cercle partiel traversant les points centraux de la bille ;
ε étant l'angle incluant la piste de roulement (5) (angle de piste de roulement) entre les points d'intersection du diamètre de la bille et du diamètre extérieur prévu de la partie intérieure par rapport au point d'intersection des axes du joint dudit plan (E) ; et
γ étant l'angle incluant l'entretoise (18) (angle d'entretoise) entre les points d'intersection du diamètre de la bille avec le diamètre extérieur prévu de la partie intérieure par rapport au point d'intersection des axes du joint dudit plan (E).

2. Joint homocinétique fixe selon la revendication 1, **caractérisé en ce que** la condition suivante s'applique au niveau de la partie intérieure de joint (3) :
pour PCD inférieur ou égal à 62 mm : t/d supérieur à 0,16 ; et
pour PCD supérieur à 62 mm : t/d supérieur à 0,168 ;
PCD étant le diamètre de cercle partiel traversant les points centraux de la bille ;
t étant la profondeur de la piste de roulement (5) ; et
d étant le diamètre extérieur de la partie intérieure de joint (3).

3. Joint homocinétique fixe selon la revendication 1 ou 2, **caractérisé en ce que** pour l'écartement axial f, le centre des fenêtres de cage est égal à :
f/g supérieur à 0,275
depuis le bord de la cage du côté de montage, par rapport au diamètre extérieur g de la cage (10).

4. Joint homocinétique fixe selon l'une quelconque des revendications 1 à 3, **caractérisé en ce que** la condition suivante s'applique pour la cage (11) :
pour PCD inférieur ou égal à 62 mm : h/i supérieur à 0,4 ; et
pour PCD supérieur à 62 mm : h/i supérieur à 0,46 ;
PCD étant le diamètre de cercle partiel traversant les points centraux de la bille ;
h étant le rayon de l'arrondi des fenêtres de cage (10) ; et
i étant la longueur axiale des fenêtres de cage (10).

5. Joint homocinétique fixe selon l'une quelconque des revendications 1 à 4, **caractérisé en ce que** pour le diamètre d'ouverture j, la relation suivante s'applique au niveau du côté de montage de la cage (10) par rapport au diamètre extérieur d de la partie intérieure de joint (3) :
d/j supérieur à 1, 11.

6. Joint homocinétique fixe selon l'une quelconque des revendications 1 à 5, **caractérisé en ce que** les points centraux de la bille de la surface de la bille extérieure (14) et de la surface de la bille intérieure (15) de la cage (10) présentent un décalage axial.

7. Joint homocinétique fixe selon l'une quelconque des revendications 1 à 6, **caractérisé en ce que** les paires de piste de roulement (4, 5) forment un angle d'ouverture unilatéral.

8. Joint homocinétique fixe selon l'une quelconque des revendications 1 à 7, **caractérisé en ce que** les pistes de roulement à billes (5) comportent des sections (5a, 5b) de différentes courbures au niveau de la partie intérieure de joint (3), lesdites courbures évoluant de façon à se rejoindre les unes les autres, une section d'extrémité (5a) comportant une courbe de piste de roulement en direction du côté d'ouverture (9) du joint (1) qui repose entre une courbe parallèle à l'axe et un arc de cercle autour d'un point (O) sur l'axe (B) de la partie intérieure de joint (3).

9. Joint homocinétique fixe selon l'une quelconque des revendications 1 à 8, **caractérisé en ce que** l'épaisseur de paroi de la cage (10) est inférieure de 25 %, de préférence inférieure de 21 %, par rapport au diamètre des billes (6).

10. Joint homocinétique fixe selon l'une quelconque des revendications 1 à 9, **caractérisé en ce que** le rapport entre le diamètre extérieur de la cage et le diamètre intérieur de la cage est inférieur à 1,15 dans le plan de guidage des billes (6).

11. Joint homocinétique fixe selon l'une quelconque des revendications 1 à 10, **caractérisé en ce qu'**il est réalisé comme un joint à six billes pour lequel on appliqué :
pour PCD supérieur à 63 mm : (PCD+d_{K})/d_{K} < 4 ; et pour PCD inférieur ou égal à 63 mm : (PCD+d_{K})/d_{K} < 4, 25 ;
d_{K} représentant le diamètre de la bille et PCD représentant le point central du diamètre de cercle partiel de la bille.

12. Joint homocinétique fixe selon l'une quelconque des revendications 1 à 11, **caractérisé en ce que** les pistes de roulement (4) présentent des sections de différentes courbures au niveau de la partie extérieure du joint (2), lesdites courbures évoluant de façon à se rejoindre les unes les autres, une section d'extrémité (13) comportant respectivement une courbe de piste de roulement par rapport au côté d'ouverture (9) du joint (1), ladite courbe reposant entre une courbe conçue pour être parallèle à l'axe et un arc de cercle, au niveau d'un point, sur l'axe (A) de la partie extérieure de joint.

13. Joint homocinétique fixe selon l'une quelconque des revendications 1 à 12, **caractérisé en ce que** l'angle de flexion maximal est supérieur à 50° en fonctionnement.
